# EUROPEAN PATENT APPLICATION

(11) **EP 2 944 499 A1**
(43) Date of publication of application: **18.11.2015**
(21) Application number: 14168697.2
(22) Date of filing: 16.05.2014
(51) Int. Cl.: B60K 37/02, B60Q 3/02, B60Q 3/04, G01D 11/28

(54) **Driver information device**

(71) Applicant: Johnson Controls GmbH, 51399 Burscheid (DE)
(72) Inventor: Burceacov, Alexandr, 57439 Attendorn (DE); Bieletzki-Welz, Viktor, 42799 Leichlingen (DE); Schilling, Christian, 50968 Köln (DE)
(74) Representative: Finger, Catrin

(57) **Abstract**

The invention relates to a Driver information device (1), in particular vehicle Driver information device (1), comprising:
- a displaying unit (2) having a rear side (2.1) and a visible front side (2.2),
- at least one light source (L) arranged facing the rear side (2.1) of the displaying unit (2) and adapted to illuminate at least one translucent section (2.3) of the displaying unit (2),
- a printed circuit board (4) adapted to support the at least one light source (L) and an optical sensor (5), wherein
- the optical sensor (5) is adapted to receive ambient light (AL) that is transmitted from the visible front side (2.2) through one translucent section (2.3) of the display unit (2).

## Description

### Technical Field

The invention relates to a driver information device, in particular vehicle driver information device.

### Background of the Invention

Driver information devices, in particular for motor vehicles, are well known in the related art. Such driver information devices are gaining an ever-increasing presence in cockpits of motor vehicles, for example, cockpits of cars. They are used in infotainment and navigation systems, instrument clusters, and climate controls.

DE 198 49 181 A1 describes indicator lamps for motorcycles for displaying different functions and states of the motorcycle. The control lamps are colourless when the motorcycle is in a normal state. When turning the lamps on, they go to full brightness with their colour.

### Summary of the Invention

It is an object of the present invention to provide an improved driver information device.

According to the invention, the object is achieved by a driver information device according to claim 1.

Preferred embodiments of the invention are given in the dependent claims.

According to the present invention, there is provided a driver information device, in particular vehicle driver information device that comprises a displaying unit having a rear side and a visible front side, at least one light source that is arranged opposite the rear side of the display unit that is adapted to illuminate at least one translucent section of the display unit. The driver information device further comprises a printed circuit board that is adapted to support the at least one light source and an optical sensor. In the meaning of the invention, the optical sensor is adapted to receive ambient light that is transmitted from the visible front side through one translucent section of the driver information device.

The provided driver information device means an improved driver information device according to the related art, because the display unit is adapted to form a light guide wherein the display unit has a double function namely guiding the light from the light source to an indicator e.g. a window or a telltale symbol and guide the ambient light from the visible front side to the optical sensor, e.g. a photo sensor. This provides fewer disturbances created by shadows from small objects. In addition, there is no need for additional space or additional signal amplifier. Hence, a design of visible surfaces is independent from the sensor controlled illumination of the driver information device. The ambient light of the visible front side indicates the ambient light of the vehicle thus the illumination of the driver information device is adjustable to vehicle ambient light conditions. Here, the display unit is adapted to show infotainment and navigation systems, instrument clusters such as a dial, and/or climate controls.

In a preferred embodiment, the optical sensor generates an electrical signal depending on an intensity of the received ambient light. The optical sensor transmits the electrical signal to a control unit that is supported by the printed circuit board and that is adapted to control the at least one light source depending on the electrical signal generated by the optical sensor. In case of an arrangement of more than one light source, the control unit controls all light sources depending on the electrical signal of the optical sensor. With this, the illumination of the driver information device is adjustable to ambient light conditions.

Preferably, the control unit stops evaluating the electrical signal of the optical sensor when one light source, in particular the light source that illuminates the translucent section through which the optical sensor receives the ambient light, emits light. The light emitted by the light source comprises a much higher intensity than ambient light, such as sunny daylight. Through the fact that the control unit controls the light source, the control unit knows that the light source actually emits light, thus an evaluation of the electrical signal of the optical sensor is not necessary and a faulty adjustment of the illumination of the display unit may be avoided.

In an exemplary embodiment, the optical sensor may be designed as a photo sensor, in particular as a photo tube that is able to transform an optical signal into an electrical signal using the photoelectric effect.

Furthermore, the at least one light source may be designed as a light emitting diode. Light emitting diodes are widely used in the related art and thus, are a reliable light emitting element. Alternatively, the light source may be any other type of light emitting device.

To realize the background illumination of the display unit, the display unit is made from a translucent material that is coated at least section wise by an opaque material. In case of that the displaying unit is designed as a dial, the dial is coated by the opaque material that comprises recesses in form of symbols and/or numbers. The optical sensor is assigned to at least one translucent section of the display unit to receive ambient light.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and an accompanying drawing which are given by way of illustration only, and thus, are not limitative of the present invention, and wherein:

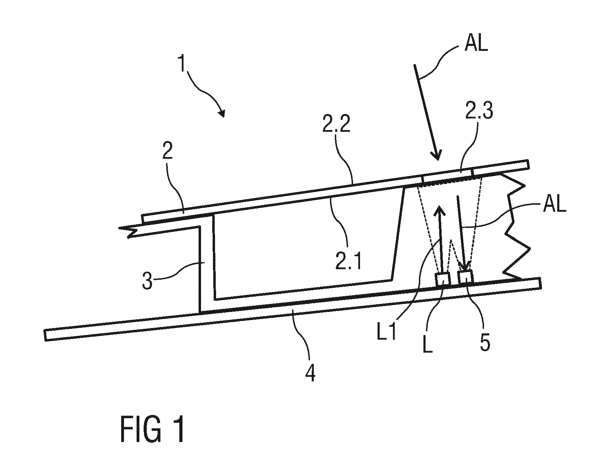

- Figure 1: is a schematic cross-sectional view of a driver information device according to the invention.

### Detailed Description of Preferred Embodiments

**Figure 1** shows a cross-sectional view of a driver information device 1 according to the invention.

The driver information device 1 is adapted to arrange within a vehicle dashboard and to facilitate reading of vehicle operating information by a vehicle occupant.

In the present embodiment, the driver information device 1 comprises a displaying unit 2 that is arranged within a recess of a not shown housing. The displaying unit 2 comprises a rear side 2.1 and a front side 2.2 that is visible by a vehicle occupant. The displaying unit 2 may comprise a circular dial member with painted graphics or liquid crystal display. The displaying unit 2 is made from a translucent material that is coated by an opaque material at least section wise. Translucent sections 2.3 that are free of the opaque material provide visual symbols or signals of a function or state of the vehicle. Therefore, the displaying unit 2 may be designed as a speedometer, a tachometer, an engine condition indicator, such as a telltale, or any other type of gauge or dial known in the art.

The displaying unit 2 is coupled to a light housing 3 for guiding light L1 towards the rear side 2.1 of the displaying unit 2. Therefore, the light housing 3 comprises a number of channels that are adapted for more evenly distribute light L1 from one or more light sources L to a desired area of the displaying unit 2, in particular to the translucent sections 2.3 of the displaying unit 2 that are free of the opaque material, so that the light L1 from the light source L is visible for the vehicle occupant.

In an exemplary embodiment, the light source L is a light emitting diode and emits light L1 towards one translucent section 2.3 of the displaying unit 2. In addition, there are more than one light sources L arranged, whereby one light source L is adapted to illuminate one translucent section 2.3. Alternatively, there may be one light source L adapted to illuminate more than one translucent section 2.3.

The displaying unit 2 is further coupled to a printed circuit board 4 that supports the light housing 3 and the at least one light source L, whereby the light source L is mounted on the printed circuit board 4.

The printed circuit board 4 further supports an optical sensor 5 that is mounted next to the light source L regarding the present embodiment. The light source L that is shown in the present embodiment is adapted to illuminate the translucent section 2.3 through which the optical sensor 5 receives an ambient light AL of the visible front side 2.2. The ambient light AL from the visible front side 2.2 corresponds to an ambient light AL of the vehicle, thus the optical signal 5 receives the ambient light AL of the vehicle.

The optical sensor 5 may be designed as a photo tube using the photoelectric effect or as any other optical sensor that is suitable for converting an optical signal into an electrical signal.

Depending on an intensity of the received ambient light AL, the optical sensor 5 converts the received ambient light AL into an electrical signal. A not shown control unit that is supported on the printed circuit board 4 receives the electrical signal and controls the light source L by evaluating the electrical signal of the optical sensor 5. Controlling the light source L means controlling an intensity of the emitted light and thus an illumination intensity of the display unit 2 by the light source L. For example, when the optical sensor 5 receives a lower intensity of ambient light AL, the control unit controls the light source L in a manner to emit a higher intensity of light L1 or the other way around to emit a lower intensity of light L1 to reduce a dazzling effect.

The control unit will stop evaluating the electrical signal of the optical sensor 5 when the light source L emits light L1. Particularly, it refers to the light source L that illuminates the same translucent section 2.3 through which the optical sensor 5 receives the ambient light AL.

For example, the light source L emits light L1 sequentially as it is the case when activating a direction indicator, the control unit stops evaluating the electrical signals that comprise the intensity of the light L1 from the light source L. When the translucent section 2.3 is illuminated by the light source L, the light L1 that is received by the optical sensor 5 comprises a much higher intensity than ambient light AL. Through the fact that the control unit controls the light source L; the control unit knows when the light source L emits light L1. Thus, the light source L and if applicable the other light sources L may be controlled in an optimum manner regarding a vehicle occupant comfort.

### List of References

- 1: driver information device
- 2: displaying unit
- 2.1: rear side
- 2.2: front side
- 2.3: translucent section
- 3: light housing
- 4: printed circuit board
- 5: optical sensor

- L: light source
- L1: light
- AL: ambient light

## Claims

1. Driver information device (1), in particular vehicle driver information device (1), comprising:
- a displaying unit (2) having a rear side (2.1) and a visible front side (2.2),
- at least one light source (L) arranged facing the rear side (2.1) of the displaying unit (2) and adapted to illuminate at least one translucent section (2.3) of the displaying unit (2),
- a printed circuit board (4) adapted to support the at least one light source (L) and an optical sensor (5), wherein
- the optical sensor (5) is adapted to receive ambient light (AL) that is transmitted from the visible front side (2.2) through the translucent section (2.3) of the displaying unit (2). Driver information device (1) according to claim 1,
**characterized in that** the optical sensor (5) generates an electrical signal depending on an intensity of the received ambient light (AL).

2. Driver information device (1) according to claim 1,
**characterized in that** the printed circuit board (4) comprises a control unit that is adapted to control the light source (L) depending on the electrical signal generated by the optical sensor (5).

3. Driver information device (1) according to claim 2,
**characterized in that** the control unit stops evaluating the electrical signal of the optical sensor (5) when the light source (L), in particular the light source (L) that illuminates the translucent section (2.3) through which the optical sensor (5) receives the ambient light (AL), emits light (L1).

4. Driver information device (1) according to one of the previous claims, **characterized in that** the optical sensor (5) is a photo sensor.

5. Driver information device (1) according to one of the previous claims, **characterized in that** the at least on light source (L) is a light emitting diode.

6. Driver information device (1) according to one of the previous claims, **characterized in that** the display unit (2) is made from a translucent material that is coated at least section wise by an opaque material.
